# EUROPEAN PATENT SPECIFICATION

(11) **EP 2 523 138 B1**
(45) Date of publication and mention of the grant of the patent: **31.10.2018**
(21) Application number: 11165417.4
(22) Date of filing: 10.05.2011
(51) Int. Cl.: G06F 21/62

(54) **Unlocking method, computer readable storage medium and handheld electrical device**
Freigabeverfahren, computerlesbares Speichermedium und tragbares elektrisches Gerät
Procédé de déverrouillage, support de stockage lisible sur ordinateur et dispositif électrique portatif

(43) Date of publication of application: 14.11.2012
(73) Proprietor: HTC Corporation, Taoyuan City 330 (TW)
(72) Inventor: Huang, Chun-Hsiang, Taoyuan City, Taoyuan County 330 (TW); Lu, Tai-Ling, Taoyuan City, Taoyuan County 330 (TW); Wang, Chih-Kuang, Taoyuan City, Taoyuan County 330 (TW)
(74) Representative: 2K Patentanwälte Blasberg Kewitz & Reichel

(56) References cited:
- EP-A1- 1 592 194
- US-A1- 2002 080 192
- US-A1- 2005 022 005
- US-A1- 2005 097 563
- US-A1- 2007 250 920

## Description

### BACKGROUND

### Technical Field

The present invention relates to an unlocking method, a computer readable storage medium for storing thereof and a handheld electrical device applying thereof. More particularly, the present invention relates to a multi-mode handheld electrical device, an unlocking method for thereof and a computer readable storage medium for storing the method thereof.

### Description of Related Art

As 3C (Computer, Communications and Consumer) technology develops, there are more and more people utilizing handheld electrical devices in their daily life. Most common handheld electrical devices are personal digital assistants (PDA), mobile phones, smart phones etc. Since mobile electrical devices are designed much smaller and easy to carry, more and more people use handheld electrical device and more functions are developed for different users.

In the prior art, different filesystem permissions may be assigned according to user accounts, which can protect data stored on handheld electrical devices from being stolen. However, persons near the user of the handheld electrical device can recognize the filesystem permission retrievedaccording to the user account, which the user inputs. For example, if a wife asks her husband to show her the data stored on the husband's handheld electrical device, the husband can't log in with lower filesystem permission since most wives know their husband's user account. Hence, in this case, filesystem permissions assigned according to users' account can not protect users' privacy.

US20050022005 anticipates a user authentication method.

### SUMMARY

According to one example of this invention, an unlocking method is provided. In the unlocking method, an unlocking input is obtained to be the factor for determining which mode the handheld electrical device enters when the handheld electrical device is under the locked status. The unlocking method may take the form of a computer program, and the computer program is stored in a computer readable storage medium. Hence, when a handheld electrical device reads the computer readable storage medium to load the computer program, the handheld electrical device can perform the unlocking method. The unlocking method is suitable for a handheld electrical device with a normal mode and a limited mode to execute. The handheld electrical device in the normal mode is able to display all contents of an application installed on the handheld electrical device. The handheld electrical device in the limited mode is able to display only part of the contents of the application. The unlocking method includes the following steps: when the handheld electrical device is under a locked status, at least one unlocking input without a user account is obtained from an input unit of the handheld electrical device. The unlocking input is compared with first preset data and second preset data to generate a comparison result. The locked status of the handheld electrical device is released according to the comparison result. When the unlocking input matches the first preset data, the locked status of the handheld electrical device is released and the handheld electrical device enters the normal mode. When the unlocking input matches the second preset data, the locked status of the handheld electrical device is released and the handheld electrical device enters the limited mode.

According to another example of this invention, a handheld electrical device is provided. When the handheld electrical device is under the locked status, an unlocking input, which is obtained through an input unit of the handheld electrical device, is taken as the factor for determining which mode the handheld electrical device enters. The handheld electrical device in the normal mode is able to display all contents of an application installed on the handheld electrical device. The handheld electrical device in the limited mode is able to display only part of the contents of the application. The handheld electrical device includes an input unit, a comparing module and a control module. When the handheld electrical device is under a locked status, the input unit generates at least one unlocking input without a user account. The comparing module compares the unlocking input with first preset data and second preset data to generate a comparison result. The control module releases the locked status of the handheld electrical device according to the comparison result. When the unlocking input matches the first preset data, the control module releases the locked status of the handheld electrical device and makes the handheld electrical device enter the normal mode. When the unlocking input matches the second preset data, the control module releases the locked status of the handheld electrical device and makes the handheld electrical device enter the limited mode.

Above all, since the unlocking input does not include the user account, which may be obtained easily by the user's relatives or friends, persons around the user of the handheld electrical device may not know if the handheld electrical device enters the normal mode or not according to the user account. If the scenario is that the wife wants to see the content stored in the husband's handheld electrical device, the husband can controls his handheld electrical device to enter the limited mode by the unlocking input without the user account, which may not be aware by the wife easily. The present invention can be applied in other scenarios to achieve similar advantage, which should not be limited in this disclosure.

These and other features, aspects, and advantages of the present invention will become better understood with reference to the following description and appended claims. It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the examples, with reference made to the accompanying drawings as follows:
Fig. 1 illustrates a flow diagram of an unlocking method according to one example of this invention; and
Fig. 2 illustrates a block diagram of a handheld electrical device according to one example of this invention.

### DETAILED DESCRIPTION

Reference will now be made in detail to the present examples of the invention, examples of which are illustrated in the accompanying drawings. Wherever possible, the same reference numbers are used in the drawings and the description to refer to the same or like parts.

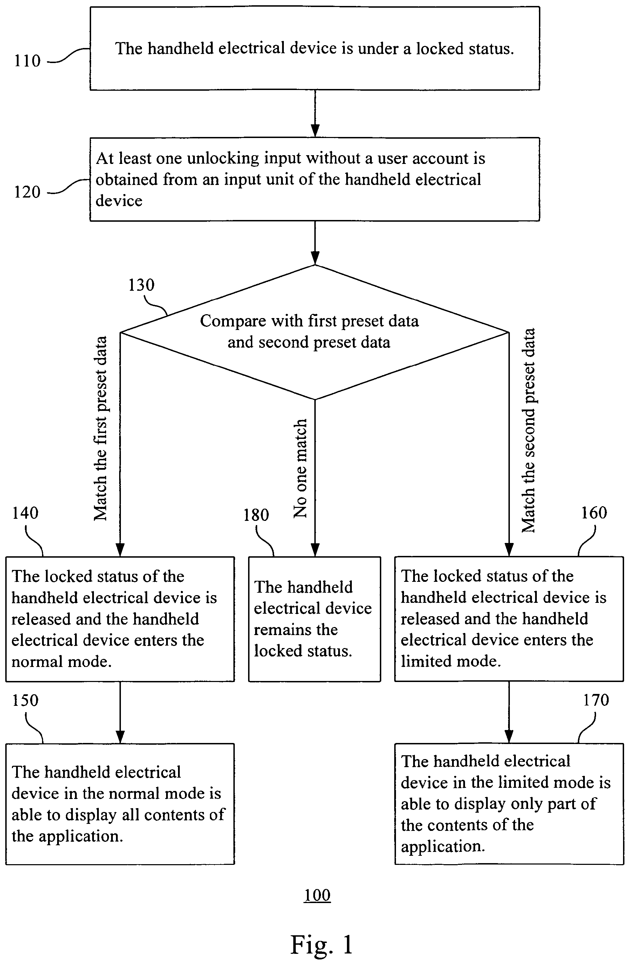

Fig. 1 illustrates a flow diagram of an unlocking method according to one example of this invention. In the unlocking method, an unlocking input is obtained to be the factor for determining which mode the handheld electrical device enters when the handheld electrical device is under the locked status. The unlocking method may take the form of a computer program product stored on a computer-readable storage medium having computer-readable instructions embodied in the medium. Hence, when a handheld electrical device reads the computer readable storage medium to load the computer program, the handheld electrical device can perform the unlocking method. Any suitable storage medium may be used including non-volatile memory such as read only memory (ROM), programmable read only memory (PROM), erasable programmable read only memory (EPROM), and electrically erasable programmable read only memory (EEPROM) devices; volatile memory such as SRAM, DRAM, and DDR-RAM; optical storage devices such as CD-ROMs and DVD-ROMs; and magnetic storage devices such as hard disk drives and floppy disk drives.

The unlocking method is suitable for a handheld electrical device with a normal mode and a limited mode to execute. The handheld electrical device in the normal mode is able to display all contents of an application installed on the handheld electrical device. The handheld electrical device in the limited mode is able to display only part of the contents of the application. The unlocking method 100 includes the following steps:
When the handheld electrical device is under a locked status (step 110), at least one unlocking input without a user account is obtained from an input unit of the handheld electrical device (step 120).

In step 130, the unlocking input is compared with first preset data and second preset data to generate a comparison result.

In step 140, when the unlocking input matches the first preset data, the locked status of the handheld electrical device is released and the handheld electrical device enters the normal mode.

Hence, in step 150, the handheld electrical device in the normal mode is able to display all contents of the application installed on the handheld electrical device.

In step 160, when the unlocking input matches the second preset data, the locked status of the handheld electrical device is released and the handheld electrical device enters the limited mode.

Hence, in step 170, the handheld electrical device in the limited mode is able to display only part of the contents of the application.

Therefore, the locked status of the handheld electrical device can be released according to the comparison result by executing steps 140-170. Besides, since the unlocking input does not include the user account, which may be obtained easily by the user's relatives or friends, persons around the user of the handheld electrical device may not know if the handheld electrical device enters the normal mode or not according to the user account. Therefore, if the scenario is that the wife wants to see the content stored in the husband's handheld electrical device, the husband can control his handheld electrical device to enter the limited mode by the unlocking input without the user account, which may not be aware by the wife easily. The present invention can be applied in other scenarios to achieve similar advantage, which should not be limited in this disclosure.

In step 180, when the unlocking input does not match either the first preset data or the second preset data, the handheld electrical device may remain the locked status. Therefore, the locked status of the handheld electrical device may not be unlocked by wrong input signals.

In addition, when the handheld electrical device is under the locked status, the handheld electrical device may display notice corresponding to the second preset data (for the limited mode). Therefore, the user other than the owner of the handheld electrical device may input the signal corresponding to the second preset data (for the limited mode) according to the displayed notice to unlock and make the handheld electrical device enter the limited mode, which can avoid that users other than the owner obtain the content stored in the handheld electrical device.

In one example of this invention, an input sketch generated through a touch screen may be taken as the unlocking input. Hence, the input unit of the handheld electrical device may be a touch screen, and the unlocking input may be an input sketch acquired from the touch screen. For example, the input sketch may be the sketch combined by at least one touched track sensed by the touch screen or other types of sketch. The first preset data may be a first unlocking sketch, and the second preset data may be a second unlocking sketch. Hence, the input sketch acquired from the touch screen can be taken as the unlocking input and be compared with the first preset data and the second preset data (step 130). Therefore, the user can touch the touch screen of the handheld electrical device to generate the unlocking input for unlocking and making the handheld electrical device enter his/her desired mode. Besides, since it's hard for persons around the users to notice that which sketch is input through touching, persons around the users of the handheld electrical device may not know which mode the handheld electrical device enters after unlock.

In another example of this invention, a fingerprint may be taken as the unlocking input. Hence, the input unit of the handheld electrical device may be a fingerprint scanner, the unlocking input may be an input fingerprint acquired from the fingerprint scanner, the first preset data may be a first unlocking fingerprint, and the second preset data may be a second unlocking fingerprint. Hence, the input fingerprint acquired from the fingerprint scanner can be taken as the unlocking input and be compared with the first preset data and the second preset data (step 130). Therefore, the user can use his/her fingerprint to unlock and make the handheld electrical device enter his/her desired mode. Besides, since it's hard for persons around the users to notice that which finger is utilized for input, persons around the users of the handheld electrical device may not know which mode the handheld electrical device enters after unlock.

In another example of this invention, an input password acquired from a keyboard may be taken as the unlocking input. Therefore, the input unit of the handheld electrical device may be a keyboard, the unlocking input may be an input password acquired from the keyboard, the first preset data may be a first unlocking password, and the second preset data may be a second unlocking password. Hence, the input password acquired from the keyboard can be taken as the unlocking input and be compared with the first preset data and the second preset data (step 130). Therefore, the user can input different password to unlock and make the handheld electrical device enter his/her desired mode.

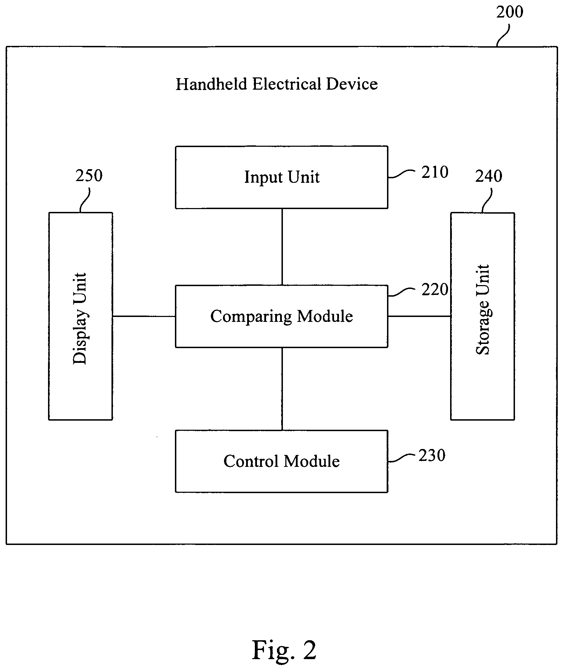

Fig. 2 illustrates a block diagram of a handheld electrical device according to one example of this invention. When the handheld electrical device is under the locked status, an unlocking input, which is obtained through an input unit of the handheld electrical device, is taken as the factor for determining which mode the handheld electrical device enters. A normal mode and a limited mode are provided by the handheld electrical device. The handheld electrical device in the normal mode is able to display all contents of an application installed on the handheld electrical device. The handheld electrical device in the limited mode is able to display only part of the contents of the application.

The handheld electrical device 200 includes an input unit 210, a comparing module 220 and a control module 230. When the handheld electrical device 200 is under a locked status, the user can operates the input unit 210 to generate at least one unlocking input without a user account. The comparing module 220 compares the unlocking input with first preset data and second preset data to generate a comparison result.

The control module 230 releases the locked status of the handheld electrical device 200 according to the comparison result. When the unlocking input matches the first preset data, the control module 230 releases the locked status of the handheld electrical device 200 and makes the handheld electrical device 200 enter the normal mode. Hence, when the handheld electrical device 200 enters the normal mode, the handheld electrical device 200 in the normal mode is able to display all contents of the application installed on the handheld electrical device 200.

When the unlocking input matches the second preset data, the control module 230 releases the locked status of the handheld electrical device 200 and makes the handheld electrical device 200 enter the limited mode. Hence, the handheld electrical device 200 in the limited mode is able to display only part of the contents of the application. Wherein, the first preset data and the second preset data may be stored in a storage unit 240 in advance for comparison. Therefore, since the unlocking input does not include the user account, which may be obtained easily by the user's relatives or friends, persons around the user of the handheld electrical device 200 may not know if the handheld electrical device 200 enters the normal mode or not according to the user account. If the scenario is that the wife wants to see the content stored in the husband's handheld electrical device 200, the husband can make his handheld electrical device 200 enter the limited mode by the unlocking input without the user account, which may not be aware by the wife easily. The present invention can be applied in other scenarios to achieve similar advantage, which should not be limited in this disclosure.

When the comparing module 220 determines that the unlocking input does not match either the first preset data or the second preset data, the control module 230 may drive the handheld electrical device 200 to remain the locked status. Therefore, the locked status of the handheld electrical device 200 may not be unlocked by wrong input signals.

In addition, when the handheld electrical device 200 is under the locked status, a display unit 250 of the handheld electrical device 200 may display notice corresponding to the second preset data (for the limited mode). Therefore, the user other than the owner of the handheld electrical device 200 may input the signal corresponding to the second preset data (for the limited mode) according to the displayed notice to unlock and make the handheld electrical device 200 enter the limited mode, which can avoid that users other than the owner obtain the content stored in the handheld electrical device 200.

In one example of this invention, an input sketch acquired from a touch screen may be taken as the unlocking input. Hence, the input unit 210 may be a touch screen, and the unlocking input may be an input sketch acquired from the touch screen. For example, the input sketch may be the sketch combined by at least one touched track sensed by the touch screen (input unit 210) or other types of sketch. The first preset data may be a first unlocking sketch, and the second preset data may be a second unlocking sketch. Hence, the input sketch acquired from the touch screen can be taken as the unlocking input and be provided to the comparing module 220 for comparison. Therefore, the user can touch the touch screen of the handheld electrical device 200 to generate the unlocking input for unlocking and make the handheld electrical device 200 enter his/her desired mode. Besides, since it's hard for persons around the users to notice that which sketch is input through touching, persons around the users of the handheld electrical device 200 may not know if the handheld electrical device 200 enters the normal mode or not according to the user account.

In another example of this invention, a fingerprint may be taken as the unlocking input. Hence, the input unit 210 of the handheld electrical device 200 may be a fingerprint scanner, the unlocking input may be an input fingerprint acquired from the fingerprint scanner, the first preset data may be a first unlocking fingerprint, and the second preset data may be a second unlocking fingerprint. The input fingerprint acquired from the fingerprint scanner can be taken as the unlocking input and be provided to the comparing module 220 for comparison. Therefore, the user can use his/her fingerprint to unlock and make the handheld electrical device enter his/her desired mode. Besides, since it's hard for persons around the users to notice that which finger is utilized for input, persons around the users of the handheld electrical device 200 may not know if the handheld electrical device 200 enters the normal mode or not according to the user account.

In another example of this invention, an input password acquired from a keyboard may be taken as the unlocking input. Hence, the input unit 210 of the handheld electrical device 200 may be a keyboard, the unlocking input may be an input password acquired from the keyboard, the first preset data may be a first unlocking password, and the second preset data may be a second unlocking password. Hence, the input password acquired from the keyboard can be taken as the unlocking input and be provided to the comparing module 220 for comparison. Therefore, the user can input different password to unlock and make the handheld electrical device enter his/her desired mode.

Above all, since the unlocking input does not include the user account, which may be obtained easily by the user's relatives or friends, persons around the user of the handheld electrical device may not know if the handheld electrical device enter the normal mode or not according to the user account. If the scenario is that the wife wants to see the content stored in the husband's handheld electrical device, the husband can make his handheld electrical device enter the limited mode by the unlocking input without the user account, which may not be aware by the wife easily. The present invention can be applied in other scenarios to achieve similar advantage, which should not be limited in this disclosure.

Although the present invention has been described in considerable detail with reference to certain examples thereof, other examples are possible. It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims.

## Claims

1. An unlocking method for a handheld electrical device with a normal mode and a limited mode, wherein the handheld electrical device in the normal mode is able to display all contents of an application installed on the handheld electrical device, and the handheld electrical device in the limited mode is able to display only part of the contents of the application, the unlocking method comprises:
displaying a notice that corresponds to unlocking with a second preset data corresponding to the limited mode on a display unit of the handheld electrical device under a locked status;
obtaining (120) at least one unlocking input without a user account from an input unit of the handheld electrical device when the handheld electrical device is under a locked status while the notice that corresponds to unlocking with the second preset data corresponding to the limited mode is displayed on the display unit of the handheld electrical device;
comparing (130) the unlocking input with first preset data and second preset data to generate a comparison result, wherein the first preset data and the second preset data is stored in the handheld electrical device; and
releasing the locked status of the handheld electrical device according to the comparison result, wherein releasing the locked status of the handheld electrical device according to the comparison result comprises:
releasing (140) the locked status of the handheld electrical device and making the handheld electrical device enter the normal mode when the unlocking input matches the first preset data; and
releasing (160) the locked status of the handheld electrical device and making the handheld electrical device enter the limited mode when the unlocking input matches the second preset data

2. The unlocking method of claim 1, wherein the input unit of the handheld electrical device is a touch screen, the unlocking input is an input sketch acquired from the touch screen, the first preset data is a first unlocking sketch, the second preset data is a second unlocking sketch.

3. The unlocking method of claim 1, wherein the input unit of the handheld electrical device is a fingerprint scanner, the unlocking input is an input fingerprint acquired from the fingerprint scanner, the first preset data is a first unlocking fingerprint, the second preset data is a second unlocking fingerprint.

4. The unlocking method of claim 1, wherein the input unit of the handheld electrical device is a keyboard, the unlocking input is an input password acquired from the keyboard, the first preset data is a first unlocking password, the second preset data is a second unlocking password.

5. A computer readable storage medium for storing a program, wherein a handheld electrical device performs any one of the unlocking method of claims 1-4 when the handheld electrical device reads the computer-readable storage medium and executes the program.

6. A handheld electrical device with a normal mode and a limited mode, wherein the handheld electrical device (200) in the normal mode is able to display all contents of an application installed on the handheld electrical device (200), the handheld electrical device (200) in the limited mode is able to display only part of the contents of the application, the handheld electrical device (200) comprises:
a display unit displaying a notice that corresponds to unlocking with a second preset data corresponding to the limited mode under a locked status of the handheld electrical device (200);
an input unit (210) for generating at least one unlocking input without a user account when the handheld electrical device (200) is under a locked status while the notice that corresponds to unlocking with the second preset data corresponding to the limited mode is displayed on the display unit of the handheld electrical device;
a comparing module (220) for comparing the unlocking input with first preset data and second preset data to generate a comparison result, wherein the first preset data and the second preset data is stored in the handheld electrical device; and
a control module (230) for releasing the locked status of the handheld electrical device (200) according to the comparison result, wherein releasing the locked status of the handheld electrical device according to the comparison result comprises:
the control module (230) releases the locked status of the handheld electrical device (200) and makes the handheld electrical device (200) enter the normal mode when the unlocking input matches the first preset data; and
the control module (230) releases the locked status of the handheld electrical device (200) and makes the handheld electrical device (200) enter the limited mode when the unlocking input matches the second preset data.

7. The handheld electrical device of claim 6, wherein the input unit is a touch screen, the unlocking input is an input sketch acquired from the touch screen, the first preset data is a first unlocking sketch, the second preset data is a second unlocking sketch.

8. The handheld electrical device of claim 6, wherein the input unit is a fingerprint scanner, the unlocking input is an input fingerprint acquired from the fingerprint scanner, the first preset data is a first unlocking fingerprint, the second preset data is a second unlocking fingerprint.

9. The handheld electrical device of claim 6, wherein the input unit is a keyboard, the unlocking input is an input password acquired from the keyboard, the first preset data is a first unlocking password, the second preset data is a second unlocking password.

## Patentansprüche

1. Entriegelungsverfahren für ein elektrisches Handgerät mit einem Normalmodus und einem begrenzten Modus, wobei das elektrische Handgerät im Normalmodus in der Lage ist, alle Inhalte einer auf dem elektrischen Handgerät installierten Anwendung anzuzeigen, und das elektrische Handgerät im begrenzten Modus in der Lage ist, nur einen Teil des Inhalts der Anwendung anzuzeigen, wobei das Entriegelungsverfahren umfasst:
Anzeige eines Hinweises, der der Entriegelung entspricht, mit zweiten voreingestellten Daten, die dem eingeschränkten Modus entsprechen, auf einer Anzeigeeinheit des elektrischen Handgerätes im gesperrten Zustand;
Erhalten (120) mindestens einer Entriegelungseingabe ohne Benutzerkonto von einer Eingabeeinheit des elektrischen Handgeräts, wenn sich das elektrische Handgerät in einem gesperrten Zustand befindet, während der Hinweis, der dem Entriegeln mit den zweiten voreingestellten Daten entspricht, die dem begrenzten Modus entsprechen, auf der Anzeigeeinheit des tragbaren elektrischen Geräts angezeigt wird;
Vergleichen (130) der Entriegelungseingabe mit ersten voreingestellten Daten und zweiten voreingestellten Daten, um ein Vergleichsergebnis zu erzeugen, wobei die ersten Voreinstelldaten und die zweiten Voreinstelldaten in dem elektrischen Handgerät gespeichert sind; und
Freigeben des gesperrten Zustandes des elektrischen Handgerätes gemäß dem Vergleichsergebnis, wobei das Freigeben des gesperrten Zustandes des elektrischen Handgerätes gemäß dem Vergleichsergebnis umfasst:
Freigeben (140) des gesperrten Zustandes des elektrischen Handgerätes und Einschalten des elektrischen Handgerätes in den Normalmodus, wenn die Entriegelungseingabe mit den ersten voreingestellten Daten übereinstimmt; und
Freigabe (160) des verriegelten Zustandes des elektrischen Handgerätes und Einschalten des elektrischen Handgerätes in den begrenzten Modus, wenn die Entriegelungseingabe mit den zweiten voreingestellten Daten übereinstimmt.

2. Entriegelungsverfahren nach Anspruch 1, wobei die Eingabeeinheit des elektrischen Handgerätes ein Touchscreen ist, die Entriegelungseingabe eine vom Touchscreen erfasste Eingabeskizze ist, die ersten voreingestellten Daten eine erste Entriegelungsskizze sind, die zweiten Voreinstelldaten eine zweite Entriegelungsskizze sind.

3. Entriegelungsverfahren nach Anspruch 1, wobei die Eingabeeinheit des elektrischen Handgerätes ein Fingerabdruckscanner ist, der Entriegelungseingabe ein vom Fingerabdruckscanner erfasster Eingabefingerabdruck ist, die ersten Voreinstelldaten ein erster Entriegelungsfingerabdruck sind, die zweiten Voreinstelldaten ein zweiter Entriegelungsfingerabdruck sind.

4. Entriegelungsverfahren nach Anspruch 1, wobei die Eingabeeinheit des elektrischen Handgerätes eine Tastatur ist, die Entriegelungseingabe ein von der Tastatur erhaltenes Eingabepasswort ist, die ersten voreingestellten Daten ein erstes Entriegelungspasswort sind, die zweiten voreingestellten Daten ein zweites Entriegelungspasswort sind.

5. Computerlesbares Speichermedium zum Speichern eines Programms, wobei ein elektrisches handgerät eines der Entriegelungsverfahren der Ansprüche 1-4 durchführt, wenn das elektrische Handerät das computerlesbare Speichermedium liest und das Programm ausführt.

6. Elektrisches Handgerät mit einem Normalmodus und einem begrenzten Modus, wobei das elektrische Handgerät (200) im Normalmodus in der Lage ist, alle Inhalte einer auf dem elektrischen Handgerät (200) installierten Anwendung anzuzeigen, das elektrische Handgerät (200) im begrenzten Modus in der Lage ist, nur einen Teil des Inhalts der Anwendung anzuzeigen, wobei das elektrische Handgerät (200) umfasst:
eine Anzeigeeinheit, die einen Hinweis anzeigt, der dem Entriegeln entspricht, mit zweiten voreingestellten Daten, die dem begrenzten Modus entsprechen, in einem gesperrten Zustand des elektrischen Handgeräts (200);
eine Eingabeeinheit (210) zum Erzeugen mindestens einer Entriegelungseingabe ohne Benutzerkonto, wenn sich das elektrische Handgerät (200) in einem gesperrten Zustand befindet, während auf der Anzeigeeinheit des elektrischen Handgeräts der Hinweis angezeigt wird, der dem Entriegeln mit den dem begrenzten Modus entsprechenden zweiten voreingestellten Daten entspricht;
ein Vergleichsmodul (220) zum Vergleichen der Entriegelungseingabe mit ersten voreingestellten Daten und zweiten Voreingestellten Daten, um ein Vergleichsergebnis zu erzeugen, wobei die ersten voreingestellten Daten und die zweiten voreingestellten Daten in dem elektrischen Handgerät gespeichert sind; und
ein Steuermodul (230) zum Freigeben des gesperrten Zustandes des elektrischen Handgerätes (200) gemäß dem Vergleichsergebnis, wobei das Freigeben des gesperrten Zustandes des elektrischen Handgerätes gemäß dem Vergleichsergebnis umfasst:
das Steuermodul (230) gibt den gesperrten Zustand des elektrischen Handgerätes (200) frei und schaltet das elektrische Handgerät (200) in den Normalbetrieb ein, wenn die Entriegelungseingabe mit den ersten voreingestellten Daten übereinstimmt; und
das Steuermodul (230) gibt den gesperrten Zustand des elektrischen Handgerätes (200) frei und schaltet das elektrische Handgerät (200) in den begrenzten Modus ein, wenn die Entriegelungseingabe mit den zweiten voreingestellten Daten übereinstimmt.

7. Elektrisches Handgerät nach Anspruch 6, wobei die Eingabeeinheit ein Touchscreen ist, die Entriegelungseingabe eine vom Touchscreen erfasste Eingabeskizze ist, die ersten voreingestellten Daten eine erste Entriegelungsskizze sind, die zweiten voreingestellten Daten eine zweite Entriegelungsskizze sind.

8. Elektrisches Handgerät nach Anspruch 6, wobei die Eingabeeinheit ein Fingerabdruckscanner ist, der Entriegelungseingabe ein vom Fingerabdruckscanner erfasster Eingabefingerabdruck ist, die ersten voreingestellten Daten ein erster Entriegelungsfingerabdruck sind, die zweiten voreingestellten Daten ein zweiter Entriegelungsfingerabdruck sind.

9. Elektrisches Handgerät nach Anspruch 6, wobei die Eingabeeinheit eine Tastatur ist, die Entriegelungseingabe ein von der Tastatur erhaltenes Eingabepasswort ist, die ersten voreingestellten Daten ein erstes Entriegelungspasswort sind, die zweiten voreingestellten Daten ein zweites Entriegelungspasswort sind.

## Revendications

1. Un procédé de déverrouillage pour un dispositif électrique portatif avec un mode normal et un mode limité, dans lequel le dispositif électrique portatif en mode normal est capable d'afficher tout le contenu d'une application installée sur le dispositif électrique portatif, et le dispositif électrique portatif dans le mode limité est capable d'afficher seulement une partie du contenu de l'application, le procédé de déverrouillage comprenant :
l'affichage d'une notice correspondant au déverrouillage avec des secondes données prédéfinies correspondant au mode limité sur une unité d'affichage du dispositif électrique portatif sous un état de verrouillage ;
l'obtention (120) d'au moins une entrée de déverrouillage sans compte d'utilisateur d'une unité d'entrée du dispositif électrique portatif lorsque le dispositif électrique portatif est sous statut verrouillé tandis que la notice qui correspond au déverrouillage avec les secondes données prédéfinies correspondant au mode limité est affichée sur l'unité d'affichage du dispositif électrique portatif ;
comparer (130) l'entrée de déverrouillage avec les premières données prédéfinies et les secondes données prédéfinies pour générer un résultat de comparaison, dans lequel les premières données prédéfinies et les secondes données prédéfinies sont stockées dans le dispositif électrique portatif ; et
libérer l'état de verrouillage du dispositif électrique portatif en fonction du résultat de la comparaison, dans lequel la libération de l'état de verrouillage du dispositif électrique portatif en fonction du résultat de la comparaison comporte :
libérer (140) l'état de verrouillage du dispositif électrique portatif et amener le dispositif électrique portatif dans le mode normal lorsque l'entrée de déverrouillage correspond avec les premières données prédéfinies ; et
libérer (160) l'état de verrouillage du dispositif électrique portatif et amener le dispositif électrique portatif dans le mode limité lorsque l'entrée de déverrouillage correspondant aux secondes données prédéfinies.

2. Le procédé de déverrouillage de la revendication 1, dans lequel l'unité d'entrée du dispositif électrique portatif est un écran tactile, l'entrée de déverrouillage est une esquisse d'entrée acquise à partir de l'écran tactile, les premières données prédéfinies sont un premier croquis de déverrouillage, les secondes données prédéfinies sont un second croquis de déverrouillage.

3. Le procédé de déverrouillage de la revendication 1, dans lequel l'unité d'entrée du dispositif électrique portatif est un scanner d'empreintes digitales, l'entrée de déverrouillage étant une empreinte digitale d'entrée provenant du scanner d'empreintes digitales, les premières données préétablies étant une première empreinte digitale de déverrouillage, les seconde données prédéfinies étant une seconde empreinte de déverrouillage.

4. Le procédé de déverrouillage selon la revendication 1, dans lequel l'unité d'entrée du dispositif électrique portatif est un clavier, l'entrée de déverrouillage est un mot de passe d'entrée acquis à partir du clavier, les premières données prédéfinies sont un premier mot de passe de déverrouillage, les secondes données prédéfinies sont un second mot de passe de déverrouillage.

5. Un support de stockage lisible par ordinateur pour stocker un programme, dans lequel un dispositif électrique portatif exécute l'un quelconque des procédés de déverrouillage selon les revendications 1 à 4 lorsque le dispositif électrique portatif lit le support de stockage lisible par ordinateur et exécute le programme.

6. Un dispositif électrique portatif avec un mode normal et un mode limité, dans lequel le dispositif électrique portatif (200) dans le mode normal est capable d'afficher tout le contenu d'une application installée sur le dispositif électrique portatif (200), le dispositif électrique portatif (200) dans le mode limité pouvant afficher une partie seulement du contenu de l'application, le dispositif électrique portatif (200) comprenant:
une unité d'affichage pour l'affichage d'une notice correspondant à un déverouillage avec des secondes données prédéfinies correspondant au mode limité sous un état de verrouillage du dispositif électrique portatif (200) ;
une unité d'entrée (210) pour générer au moins une entrée de déverrouillage sans compte d'utilisateur lorsque le dispositif électrique portatif (200) est sous un état verrouillé tandis que la notice correspondant au déverrouillage avec les secondes données prédéfinies correspondant au mode limité est affichée sur l'unité d'affichage du dispositif électrique portatif ;
un module de comparaison (220) pour comparer l'entrée de déverrouillage aux premières données prédéfinies et aux secondes données prédéfinies pour générer un résultat de comparaison, dans lequel les premières données prédéfinies et les secondes données prédéfinies sont stockées dans le dispositif électrique portatif ; et
un module de commande (230) pour libérer l'état verrouillé du dispositif électrique portatif (200) en fonction du résultat de la comparaison, dans lequel la libération de l'état de déverrouillage du dispositif électrique portatif en fonction du résultat de la comparaison comporte :
le module de commande (230) libère le statut verrouillé du dispositif électrique portatif (200) et fait entrer le dispositif électrique portatif (200) dans le mode normal lorsque l'entrée de déverrouillage correspond au premières données prédéfinies; et le module de commande (230) libère le statut verrouillé du dispositif électrique portatif (200) et fait passer le dispositif électrique portatif (200) en mode limité lorsque l'entrée de déverrouillage correspond aux secondes données prédéfinies.

7. Le dispositif électrique portatif de la revendication 6, dans lequel l'unité d'entrée est un écran tactile, l'entrée de déverrouillage est une esquisse d'entrée acquise à partir de l'écran tactile, les premières données prédéfinies sont un premier croquis de déverrouillage, les deuxièmes données prédéfinies sont un second croquis de déverrouillage.

8. Le dispositif électrique portatif de la revendication 6, dans lequel l'unité d'entrée est un scanner d'empreintes digitales, l'entrée de déverrouillage est une empreinte digitale d'entrée provenant du scanner d'empreintes digitales, les premières données prédéfinies étant une première empreinte digitale de déverrouillage, les secondes données prédéfinies étant une seconde empreinte digitale de déverrouillage.

9. Le dispositif électrique portatif de la revendication 6, dans lequel l'unité d'entrée est un clavier, l'entrée de déverrouillage est un mot de passe d'entrée acquis à partir du clavier, les premières données prédéfinies sont un premier mot de passe de déverrouillage, les secondes données prédéfinies sont un second mot de passe de déverrouillage.
